# EUROPÄISCHE PATENTSCHRIFT

(11) **EP 1 021 569 B1**
(45) Veröffentlichungstag und Bekanntmachung des Hinweises auf die Patenterteilung: **24.07.2002**
(21) Anmeldenummer: 98931993.4
(22) Anmeldetag: 21.04.1998
(51) Int. Cl.: C21B 13/00

(54) **VERFAHREN UND VORRICHTUNG ZUR GEWINNUNG VON EISEN DURCH DIREKTREDUKTION**
METHOD AND DEVICE FOR EXTRACTING IRON BY DIRECT REDUCTION
PROCEDE ET DISPOSITIF POUR L'EXTRACTION DE FER PAR REDUCTION DIRECTE

(30) Priorität: 21.04.1997 DE 19717750
(43) Veröffentlichungstag der Anmeldung: 26.07.2000
(73) Patentinhaber: Ottow, Manfred, Dr., 13465 Berlin (DE)
(72) Erfinder: Ottow, Manfred, Dr., 13465 Berlin (DE)
(74) Vertreter: Pfenning, Meinig & Partner GbR
(86) Internationale Anmeldenummer: DE9801144
(87) Internationale Veröffentlichungsnummer: WO9848057

(56) Entgegenhaltungen:
- DE-B- 1 178 869
- DE-B- 1 201 377
- FR-A- 1 521 338
- FR-A- 2 049 293
- US-A- 1 792 507
- US-A- 1 832 731
- US-A- 1 863 804
- US-A- 3 948 646
- PATENT ABSTRACTS OF JAPAN vol. 008, no. 241 (C-250), 6. November 1984 & JP 59 123707 A (KAWASAKI SEITETSU KK), 17. Juli 1984

## Beschreibung

Die vorliegende Erfindung bezieht sich auf ein Verfahren und eine Vorrichtung zur Direktreduktion von Eisenerz mit Kohle.

Derartige Verfahren und Vorrichtungen werden in der Eisen- und Stahlerzeugung aus Eisenerz, d.h. zum Beispiel im Hüttenwesen, eingesetzt.

Die für den weitaus größten Teil der Eisenerzeugung aus Erz angewandten Verfahren nutzen den Kohlenstoff der Kohle oder des Kokses für zwei gleichzeitig ablaufende Vorgänge:

Kohlenstoff wirkt erstens als chemisches Reduktionsmittel und übernimmt den Sauerstoff vom Eisenoxid.

Kohlenstoff liefert zweitens durch Verbrennung mit Sauerstoff (meist aus Luft) die notwendige Prozeßwärme.

Diese beiden Verfahrensschritte erfordern für die jeweils beste Nutzung der Kohle thermodynamische Bedingungen, die sich gegenseitig ausschließen ("Thermodynamisches Dilemma").
- Für die Reduktion muß das chemische Potential des Sauerstoffs in der Atmosphäre möglichst gering sein, d.h. hoher CO-, geringer CO₂-Gehalt und niedriger, im Gleichgewicht mit CO befindlicher O₂-Gehalt.
- Für die möglichst vollständige Verbrennung des Kohlenstoffs zu CO₂ ist ein mindestens den stöchiometrischen Anforderungen genügender O₂-Gehalt der Verbrennungsatmosphäre erforderlich.

Bei den zur Zeit industriell genutzten Kohlereduktionsverfahren werden Kompromisse eingegangen. Daher muß mehr Energie aufgewendet werden als für den eigentlichen Eisenerzeugungsprozeß erforderlich ist. Die Verfahren führen dabei entweder zu Reduktionsgas, das nicht die volle Fähigkeit zur Reduktion des Oxids hat, weil das Gas, bevor es zur Reduktion benutzt wird, bereits durch Teilverbrennung Sauerstoff aufgenommen hat, oder sie führen dazu, daß die nötige Wärme nicht mit dem besten Wirkungsgrad erzeugt wird, da das Gas nicht vollständig zu CO₂ verbrannt werden kann.

Der nicht genutzte Energieanteil wird, je nach Verfahren, als chemische Energie in Form von Kohlenmonoxid und Wasserstoff oder als fühlbare Wärme oder beides abgeführt. Die mehr oder weniger günstige Verwendung des Kuppelproduktes, Energie, dieser nicht autothermen Verfahren hat wesentlichen Einfluß auf die Wirtschaftlichkeit des Gesamtprozesses. Beim Hochofenverfahren wird die überschüssige Energie in chemischer Form als Gichtgas an meist vorhandene, werksinterne Nutzer abgegeben. Beim Drehrohrofenverfahren ist die Verwertung der Überschußenergie schwierig, weil häufig keine Nutzer vorhanden sind. Gelegentlich wird die Überschußenergie in elektrische Energie umgewandelt.

Zur Verbesserung der Energieausbeute in dem hier angesprochenen Zusammenhang sind zwei Wege eingeschlagen worden. Man hat den angesprochenen Kompromiß verbessert oder Prozesse vorgeschlagen, die ohne Überschußenergie auskommen, also autotherm sind.

Die den Energiebedarf beeinflussenden Merkmale bekannter Verfahren werden hier näher betrachtet und verglichen.

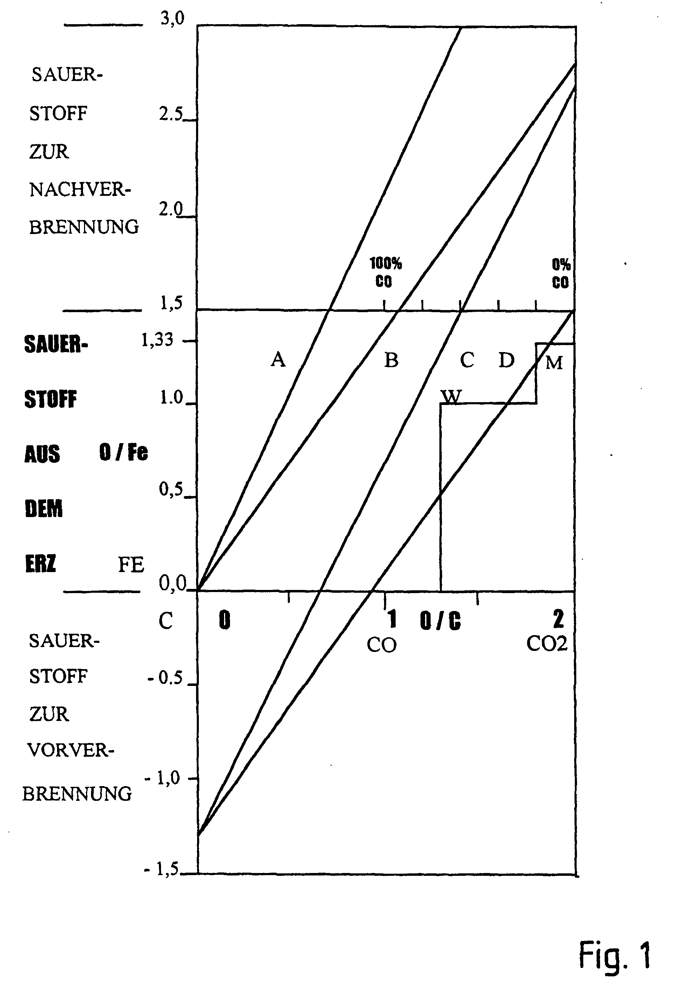

Dazu wird das RIST-Diagramm in Fig. 1 herangezogen. Dieses zeigt auf der Abszisse die Oxidation des Kohlenstoffs als Mol-Verhältnis von O/C = 0 bis O/C = 2, d.h. von Kohlenstoff, C, bis Kohlendioxid CO₂, und auf der Ordinate die Herkunft des erforderlichen Sauerstoffs, bezogen auf ein Mol Fe, somit ausgedrückt durch das Mol-Verhältnis O/Fe.

Dieser vom Kohlenstoff aufgenommene Sauerstoff kann aus dem Erz (mittlerer Bereich der Ordinate) kommen oder es kann freier Sauerstoff zur Vorverbrennung (unterer Teil) oder zur Nachverbrennung (oberer Teil) sein. Die Begriffe Vor- bzw. Nachverbrennung bezeichnen Verbrennung des C oder CO, bevor oder nachdem diese für die Reduktion genutzt worden sind.

Der die Reduktion darstellende Sauerstoffabbau aus dem Oxid wird klarer erkennbar, wenn die Sauerstoffmolzahl des jeweils während des Reduktionsvorganges vorhandenen Oxids stets auf 1 Mol Eisen statt wie konventionell auf 1, 2 oder 3 Mole Eisen bezogen wird. Es ergeben sich folgende Schreibweisen:
Haematit, Fe₂O₃, wird FeO_{1,5}
Magnetit, Fe₃O₄, wird FeO_{1,33} und
Wuestit, FeO, wird FeO_{1,05}.

Auch die zur Verbrennung eines Teils der Kohle oder des CO erforderliche Sauerstoffmenge (Vor/Nachverbrennung) wird auf 1 Mol Eisen bezogen. Die Vorverbrennung bekommt ein negatives Vorzeichen und ist bis - 1,5 aufgetragen. Werden zum Beispiel 1,5 Mole Sauerstoff /Mol Fe zur Vorverbrennung benötigt, so zeigt das Diagramm, daß aus dem Reaktor ebensoviel Sauerstoff für die Verbrennung wie für die Reduktion, jeweils 1,5 Mol O pro Mol Fe, also insgesamt 3 O/Fe, mit dem Abgas entfernt werden.

A bis D sind Prozeßlinien verschiedener Reduktionsprozesse. Die Steigung einer Prozeßlinie, also der Quotient O/Fe / O/C, kürzt sich zu C/Fe, dem spezifischen Kohlenstoffverbrauch. Dieser ist für die hier angestellten Überlegungen besonders wichtig und ist für die betrachteten Verfahren in der Legende des Bildes sowohl als Mol C/Mol Fe als auch in kg C/t Fe angegeben.

Die Prozeßlinie B stellt den Sauerstoffaustausch zwischen Eisenoxid und Kohlenstoff sowie die weitere Sauerstoffaufnahme des Kohlenstoffs durch Nachverbrennung für ein ideales autothermes Verfahren zur Erzeugung von direktreduziertem Eisen (DRI) dar. Der Kohlenstoffbedarf ist 1,4 Mol C pro Mol Fe oder 299 kg C/t Fe und damit fast der geringste, der für ein nur auf Kohlenstoff zur Reduktion und Wärmeerzeugung basierendes Verfahren möglich ist. Das Diagramm zeigt, daß die Reduktion des Eisenoxids den Kohlenstoff vollständig zu CO und darüber hinaus 10 % zu CO₂ oxidiert. Das verbleibende Gas mit 90 % CO wird nachverbrannt und mit der freigesetzten Wärme der verbleibende Enthalpiebedarf der Reaktion gedeckt.

Prozeßlinie A stellt das Drehrohrverfahren dar. Der erforderliche Energieeinsatz ist größer als der für ein autothermes Verfahren, wie aus dem Vergleich der Steigungen der Prozeßlinien zu sehen. Der eigentliche Energiebedarf der Reduktion im Drehrohr kann naturgemäß nicht größer als der eines autothermen Verfahrens sein, jedoch muß verfahrensbedingt wesentlich mehr Kohlenstoff, nämlich 2,1 Mol C/Mol Fe, d.h. 451 kg C/tFe, zugeführt werden, so daß 152 kg C/tFe in Abwärme des Prozesses umgesetzt werden. Der Grund dafür ist, daß das bei der Reduktion entstehende CO über der Kohle/Erz-Schüttung verbrannt werden muß, um die für die Boudouard-Reaktion erforderliche Wärme zu erzeugen. Diese Verbrennung kann aber nicht vollständig bis zum CO₂ durchgeführt werden, weil das CO₂ den Reduktionsvorgang beeinträchtigen würde. Daraus folgt, daß jede Wärmezufuhr ohne stoffliche Trennung der Gase des Reduktionsraumes und des Verbrennungsraumes aus prinzipiellen Gründen zu einem Kohlenstoff- und Energieverbrauch führt, die höher liegen als diejenigen eines hypothetischen autothermen Verfahrens.

Die Prozeßlinie C stellt nun den Sauerstoffaustausch in einem nur mit Koks betriebenen Hochofen dar. Die Verbrauchswerte sind wegen der Erzeugung flüssiger Endprodukte gegenüber festen Endprodukten der Prozesse A und B nur eingeschränkt vergleichbar. Im Hochofen werden sowohl Vorverbrennung des Kohlenstoffs (in der Blasformenebene) als auch Nachverbrennung (im Winderhitzer) angewandt. Bei der Berechnung des Kohlenstoffverbrauchs wurden die 0,2 C/Fe, die in dem Roheisen mit 4,3 % C den Ofen verlassen, bereits abgezogen.

Durch die teilweise Verbrennung des Kohlenstoffs in der Blasformebene (Vorverbrennung) zur Erzeugung der zum Schmelzen und Erwärmen der Beschickung sowie der Boudouardreaktion erforderlichen Enthalpie wird der Anfangspunkt der Prozeßlinie im Vergleich zu den Verfahren A und B, vom 0 - Punkt des Koordinatensystems auf - 1,30 O/Fe gesenkt. Durch diese Voroxidation des Kohlenstoffs enthält das Gas im oberen Teil des Hochofens mehr CO₂ als aus der Reduktion stammt. Das Gas ist also mit Sauerstoff "verdünnt" und ist nicht mehr so gut für die Reduktion geeignet, wie ohne diese Sauerstoffaufnahme. Entsprechend verläuft die Prozeßlinie C, anders als A und B, nahe an dem durch W und M markierten "verbotenen Bereich" des Diagramms vorbei. Da die in diesem Bereich liegenden Zusammensetzungen des Reduktionsgases nicht mehr zur Bildung von metallischem Eisen führen, kann eine Prozeßlinie nicht durch dieses Gebiet verlaufen.

Da der Kohlenstoffverbrauch des Hochofens höher als der eines autothermen Prozesses ist, könnte man nach Möglichkeiten suchen, den Verbrauch zu senken. Das würde bedeuten, daß die Steilheit der Prozeßlinie verringert wird. Aus dem Diagramm wird jedoch sofort ersichtlich, daß das nur möglich wäre, wenn der Schnittpunkt der Prozeßlinie mit der Ordinate nach oben verschoben werden könnte, da eine flachere Prozeßlinie sonst in das "verbotene Gebiet" hineinlaufen würde. Dieser Schnittpunkt ist jedoch durch den Sauerstoffbedarf der Vorverbrennung festgelegt und der ergibt sich wiederum aus dem Wärmebedarf für das Schmelzen und die übrigen Wärme erfordernden Prozesse des unteren Ofens. Da aber der Wärmebedarf des Unterofens nur noch sehr geringfügig verringert werden kann, kann die Prozeßlinie nur wenig flacher verlaufen, ohne in das "verbotene Gebiet" zu kommen und damit auch der Kohlenstoffverbrauch nur wenig gesenkt werden. Diese Überlegung schließt natürlich Kohlenstoffsubstitution durch andere Reduktionsmittel nicht aus.

Es bleibt also bei dem im Vergleich zu einem autothermen Prozeß höheren Kohlenstoffbedarf des Hochofens und der im Gichtgas enthaltenen chemischen Energie. Das Diagramm zeigt, daß das CO/CO₂-Verhältnis 3/2 ist. 1/3 des Gichtgases wird verbrannt (Nachverbrennung) und die Energie nach Übertragung durch einen Regenerator in Form von fühlbarer Wärme der Verbrennungsluft durch die Blasformen wieder eingebracht. 2/3 des Gichtgases verlassen den Prozeß mit etwa 20 % der in Form von Koks eingebrachten Energie.

Die Diskussion des Hochofenverfahrens hat gezeigt, daß Vorverbrennung des Kohlenstoffs zwar technologisch einfach ist, aber zu einer Lage der Prozeßlinie in der Nähe des "verbotenen Gebiets" führt. Daher lassen sich die geringste mögliche Neigung der Prozeßlinie und damit der geringste mögliche Kohlenstoffverbrauch mit diesem Verfahren nicht erreichen.

Die Verfahren lassen sich in langsame und schnelle Reduktionsverfahren aufteilen, bei denen die Verweilzeit des Beschickungsgutes mehrere Stunden beträgt. Als langsame Reduktionsverfahren kommen ein Verfahren im Hochofen und im Drehrostofen in Betracht, bei denen Reduktion und Verbrennung zur Wärmeerzeugung im gleichen Raum stattfinden.

Als langsame autotherme Reduktionsverfahren sind das Kinglor-Metor-Verfahren und das Höganes-Verfahren vorgeschlagen worden. Bei diesen Verfahren findet eine Verbrennung außerhalb des Reduktionsraumes statt. Nachteilig an diesem Verfahren ist jedoch der geringe Wirkungsgrad der Rückübertragung der durch Verbrennung erzeugten Wärme in den Reduktionsraum durch Wärmeleitung. Die Wärme muß dabei zuerst durch eine keramische Wand fließen und dann innerhalb des Reaktors durch Konvektion in einem fast stagnierenden Gas weitergeleitet werden. Bei einem anderen Vorschlag (DE 39 28 415 A1) wird die Wärmeübertragugn von einer externen Verbrennungskammer über ein Heizrohrsystem vorgenommen. Wegen dieser langsamen Art des Wärmetransports sind die spezifischen Leistungen dieser Prozesse gering.

Im übrigen ist es aus FR-A-1 521 338 bekannt, aus einem Direktreduktionreaktor abgeleitetes Reduktionsgas in Regeneratoren unter Zusatz von Methan zu regenerieren und dem Reduktionsreaktor wieder zuzuführen. Hierbei ist der Methanzusatz erforderlich.

Schnelle Reduktionsverfahren sind Verfahren, bei denen die Verweilzeit des Beschickungsgutes weniger als eine Stunde beträgt, wobei mit erhöhten Temperaturen gearbeitet wird.

Unter diese Verfahren fallen das Festmet-Verfahren und das Inmetco-Verfahren, bei denen die Verbrennung im gleichen Raum wie die Reduktion stattfinden, wobei jedoch die beiden Reaktionen weit voneinander entfernt ablaufen. Auf diese Weise sollen sich die beiden Gasbereiche möglichst wenig mischen. Die Wärme wird durch Strahlung von dem durch die Verbrennung erhitzten feuerfesten Material des Verbrennungsraums in den Reduktionsraum übertragen, wobei eine bessere Wärmeübertragung zum Reduktionsraum der Kohlevergasung gegeben ist. Aufgrund der räumlichen Verhältnisse kann die Verbrennung nicht bis zur vollständigen Umwandlung von CO in CO₂ geführt werden. Damit können diese Prozesse nicht autotherm sein. Es wird erhebliche Überschußenergie aus dem System abgeführt.

Aufgabe der vorliegenden Erfindung ist es, ein Verfahren zur Gewinnung von Eisen durch Direktreduktion von Eisenerz sowie eine Vorrichtung hierfür zu schaffen, wobei das Verfahren ohne zusätzlides, d.h. nicht aus Kohle im Reduktionsreaktor erhaltenes, Reduktionsgas auskommt und weitgehend autotherm sein soll und daher einen minimalen spezifischen Kohlenstoffverbrauch und Energieverbrauch aufweisen soll und wobei der Reduktionsvorgang schnell und bei hoher Temperatur mit dem Ergebnis eines hohen Metallisierungsgrades des Erzes durchführbar sein soll.

Diese Aufgabe wird erfindungsgemäß durch die kennzeichnenden Merkmale des Hauptanspruchs und des nebengeordneten Anspruchs 7 in Verbindung mit den Merkmalen in deren Oberbegriffen gelöst.

Durch den Einsatz von getrenntem Reduktionsbereich und Verbrennungsbereich zur Erzeugung der nötigen Reduktionsenthalpie für die Vergasung der Kohle sowie die Reduktion des Eisens wird ein weitgehend autothermer Prozeß ermöglicht, bei dem die geringstmögliche Menge von Kohlenstoff zur Reduktion des Eisens eingesetzt wird. In dem Verbrennungsraum wird das über den Reduktionsbedarf hinaus bei der Kohlevergasung entstehende Kohlenmonoxid verbrannt und die dabei freigesetzte Wärme über einen Hochtemperatur-Wärmetauscher auf Gas aus dem Reduktionsraum übertragen. Wesentliche Verbesserung gegenüber dem Stand der Technik ist die Zwangszirkulierung von Gas aus dem Reduktionsraum, dann durch den Wärmetauscher und zurück in den Reduktionsraum, wodurch ein äußerst effizienter Wärmeübertrag auf die zu vergasende Kohle sowie das zu reduzierende Eisenerz bewirkt wird. Durch Verwendung eines Hochtemperatur-Wärmetauschers, also eines Regenerators, wird durch Kombination mit der Zwangszirkulation des Reduktionsgases ein autothermisches Direktreduktionsverfahren hoher spezifischer Leistung geschaffen, mit dem die Durchsatzzeit von Erzen von Stunden zu Minuten gesenkt wird.

Gemäß der Erfindung wird die Wärme durch schnell strömendes Gas auf Erz/Kohle/Pellets übertragen und außerdem erfolgt die Wärmeübertragung bei hohen Temperaturen, wodurch die Reduktionszeit in den Bereich der schnellen Reduktionsverfahren fällt und auf 10 bis 15 Minuten gesenkt werden kann. Der Metallisierungsgrad des Erzes steigt auf über 90 %.

Durch die in den Unteransprüchen angegebenen Maßnahmen sind vorteilhafte Weiterbildungen und Verbesserungen möglich.

Zur Zwangszirkulation eignet sich beispielsweise ein Gebläse, das mit dem Wärmetauscher verbunden ist und die Reduktionsgase durch den Wärmetauscher umwälzt.

Besonders vorteilhaft ist dies, wenn die Reduktionsgase vor der Führung durch den Wärmetauscher und das Gebläse durch einen Kühler, beispielsweise einen weiteren Wärmetauscher, auf Temperaturen beispielsweise unter 300° C gekühlt werden, so daß übliche Gebläse verwendet werden können.

Besonders vorteilhaft ist die Verwendung von mehreren als Regeneratoren ausgebildeten Wärmetauschern, die jeweils eine Zeitlang beispielsweise durch die heißen Verbrennungsgase durchströmt und aufgeheizt werden, worauf anschließend durch denselben Regenerator die zuvor auf 300° C abgekühlten Reduktionsgase geleitet werden. Mit Hilfe geeigneter Ventilverbindungen kann durch eine zyklische Abfolge von Aufheiz- und Abkühlprozessen des Regenerators bzw. der Regeneratoren die Wärme der Verbrennungsgase besonders vorteilhaft auf die Reduktionsgase übertragen werden, wobei nur unwesentliche Sauerstoffmengen aus den Abgasen in die Reduktionsgase übergehen.

Werden gleichzeitig vier Regeneratoren eingesetzt, so lassen sich die wesentlichen Wärmetauschverfahren synchron für verschiedene räumliche Bereiche des Reduktionsraumes durchführen und so eine besonders effektive und rasche Reduktion des Eisens erzielen. Die entsprechenden vier Schritte zur optimalen Nutzung der bei der Nachverbrennung der Reduktiongsgase entstehenden Wärme sind die folgenden:
a) es wird heißes Gas aus dem Verbrennungsraum durch einen Regenerator gesaugt und zu einer Abgasanlage weitergeleitet. Hierbei kühlt sich das Verbrennungsgas ab und der Regenerator nimmt Wärme auf;
b) es wird gekühltes Reduktionsgas durch den aufgeheizten Regenerator geblasen und auf die Arbeitstemperatur des Reduktionsreaktors aufgeheizt. Dieses aufgeheizte Reduktionsgas wird zurück in den Reduktionsraum geblasen und führt so der Kohle und dem Eisenerz die nötige Reaktionsenthalpie zu;
c) dieser Regenerator wird weiter abgekühlt, indem Außenluft mit Raumtemperatur durchgeleitet wird und an den Verbrennungsraum abgegeben wird. Dabei wird die kalte sauerstoffhaltige Außenluft vorgewärmt, was zu einer Verbesserung der Energiebilanz beiträgt; und
d) durch den nunmehr nahezu auf Außentemperatur abgekühlten Regenerator wird Gas aus dem Reduktionsraum gesaugt, wodurch dieses stark abgekühlt wird. Dieses abgekühlte Gas kann dann an einen Regenerator abgegeben werden, der den unter b) beschriebenen Schritt durchführt.

Es ist unmittelbar einsehbar, daß durch Einsatz von vier Regeneratoren gleichzeitig ein zeitlich und energetisch optimierter Viertaktprozeß durchgeführt werden kann. Es sind auch weitere Variationen dieses Verfahrens denkbar, zum Beispiel die Verwendung von mehr oder weniger Regeneratoren, z.B. durch Verzicht auf die Vorheizung der Verbrennungsluft.

Das erfindungsgemäße Verfahren und die erfindungsgemäße Vorrichtung werden besonders vorteilhaft in einem Drehrostofen eingesetzt.

Im folgenden werden Beispiele des erfindungsgemäßen Verfahrens und der erfindungsgemäßen Vorrichtung beschrieben. Es zeigen:
- Fig. 1: ein Ristdiagramm,
- Fig. 2: eine schematische Darstellung einer Anlage zur Durchführung des erfindungsgemäßen Verfahrens,
- Fig. 3: eine schematische Darstellung des erfindungsgemäßes Viertaktverfahren mit vier Regeneratoren, und
- Fig. 4: die Energiebilanz eines erfindungsgemäßen Viertaktverfahrens.

Bei der Reduktion von Eisenerz mit Kohle haben der Kohlenstoff und die anderen oxidierbaren Bestandteile der Kohle zwei Aufgaben:
1. Ein Teil davon übernimmt den mit dem Eisen im Erz verbundenen Sauerstoff (Reduktion).
2. Der Rest reagiert mit freiem Sauerstoff (meist aus Luft), um die notwendige Reaktionsenthalpie für die Reduktionsreaktion bzw. Kohlevergasungsreaktion freizusetzen.

Stöchiometrisch werden die beiden Vorgänge A und B wie folgt beschrieben:
A. Reduktion mit Kohlenstoff
   Reduktion von FeO 1,5 (Haematit) zu Fe und Umwandlung von 1,5 CO zu 1,5 CO₂.

   1. FeO1,5 + 1,5 CO = Fe + 1,5 CO₂

   Reaktion der Hälfte des entstandenen CO₂ mit C (Kohlenstoffvergasung) zu 1,5 CO.

   2. 0,75 CO₂ + 0,75 C = 1,5 CO.

   Damit entsteht nach Formel 2 wieder die für den Umsatz nach Formel 1 benötigte CO-Menge.
   Die Summenformel für 1 und 2 ist

   3. FeO1,5 + 0,75 C = Fe + 0,75 CO₂ + 118 MJ/kmol.

   Die Reduktion nach Gleichung 3 ist nicht uneingeschränkt möglich. Aufgrund thermodynamischer Grenzen müssen in dem verbrauchten Reduktionsgas noch 10 % Kohlenmonoxid vorhanden sein, um die Reduktion ablaufen zu lassen. Daraus ergibt sich ein etwas höherer Kohlenstoffbedarf. Für die allgemeine Betrachtung ist das aber unerheblich. Die Berechnungen weiter unter berücksichtigen alle thermodynamischen Besonderheiten.
   Eine weitere Möglichkeit der Reduktion mit Kohlenstoff zeigt sich in der folgenden Gleichung:

   4. FeO1,5 + 1,5C = Fe + 1,5 CO + 247 MJ/Fe.

   Um die Reduktion mit 1,5 C ablaufen zu lassen, müssen dem Reduktionsreaktor 247 MJ/Fe, verglichen mit 118 MJ/Fe für Reaktion 3, zugeführt werden. In der technischen Anwendung ergibt sich ein Prozeß, der zwischen 3 und 4, jedoch näher an 4 verläuft. Bei dem erfindungsgemäßen autothermen Verfahren benötigen beide Prozesse die gleiche Kohlenstoffmenge, jedoch die über die Systemgrenze des Reduktions- und Vergasungsreaktors zu transportierende Wärme ist jedoch unterschiedlich.
B. Verbrennungsreaktion von Kohlenstoff bzw. Kohlenmonoxid mit freiem Sauerstoff
   Die Verbrennung kann von Kohlenstoff ausgehen;

   5. x C + x O₂ = CO₂ - x* 395 MJ/kmol

   oder es wird bei der Kohlevergasung nach Gleich 2 oder 4 im Überschuß gebildetes CO verbrannt:

   6. y CO + y 1/2 O₂ = y CO₂ - y* 284 MJ/kmol.

Bei der hier vorgestellten Erfindung werden die niedrigsten Werte für x bzw. y erreicht, die thermodynamisch möglich sind und daher der geringstmögliche Einsatz fossiler Brennstoffe als Energie benötigt.

Bei dem erfindungsgemäßen Verfahren wird der Stoffstrom, der sich aus der Reaktion des Erzsauerstoffs mit C, CO oder H₂ ergibt, von dem Stoffstrom, der sich aus der Reaktion des freien Sauerstoffs mit C, CO oder H₂ ergibt, physisch getrennt.

Bei der Übertragung der für die Kohlevergasung und die Reduktion erforderlichen Enthalpie mit einem Wärmetauscher ist zu berücksichtigen, daß die Kohlevergasung und die Reduktion der Eisenoxide bevorzugt bei Temperaturen der Feststoffe von über 800° C ablaufen. Wegen der geringen spezifischen Wärme der Gase muß das als Wärmeträger verwendete Gas auf möglichst hohe Temperaturen, z.B. 1300° C, erwärmt werden, um die erhebliche pro Tonne Eisen erforderliche Wärme zu übertragen, ohne daß das umzuwälzende Gasvolumen zu groß wird. Da der brauchbare Enthalpievorrat des wärmeliefernden Gases bereits bei ca. 800° C erschöpft ist, muß das Gas bei dieser Temperatur aus dem Reduktions/vergasungsbereich abgezogen und mit einem Gebläse durch einen auf ca. 1300°C erwärmten Hochtempertur-Wärmetauscher oder Regenerator befördert werden. Es gibt kein Gebläse, die diese Aufgabe dauerhaft übernehmen können. Daher muß das abgesaugte, 800° C warme Gas zuvor seine Enthalpie bis auf ca. 300° C an einen Regenerator abgeben. Das so abgekühlte Gas kann nun von einem Gebläse ohne Schwierigkeiten gefördert werden und durch einen erhitzten anderen Regenerator auf 1300° C erwärmt werden.

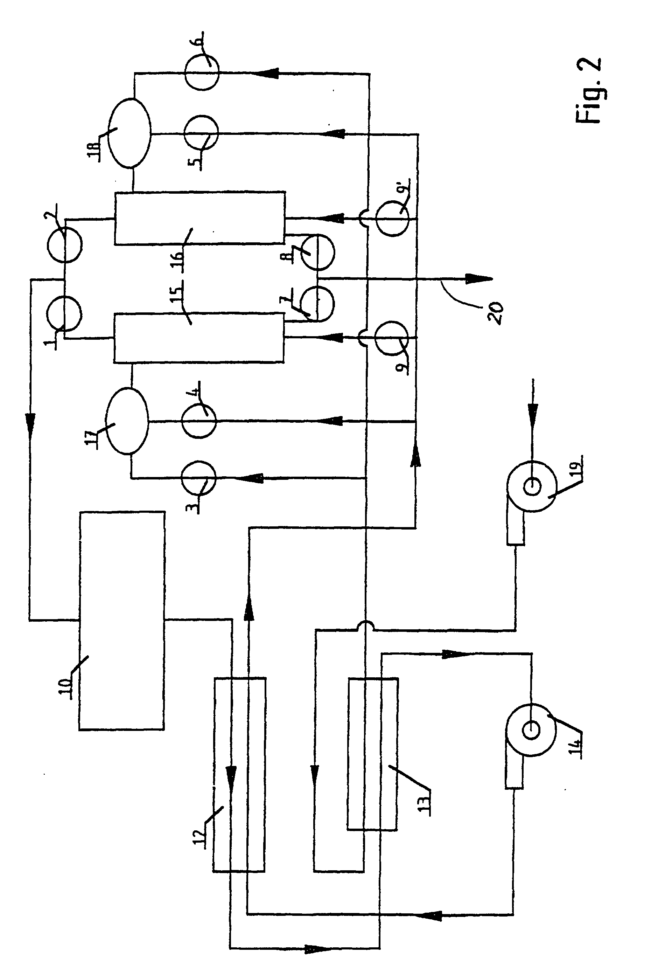

In Fig. 2 ist eine Prinzipdarstellung einer Anlage zur schnellen Reduktion von Eisenerz mit Kohle unter Hochtemperaturbedingungen dargestellt, der einen beispielsweise als Drehrostofen ausgebildeten Reduktionsreaktor 10 aufweist, dem in nicht dargestellter Weise Erz und Kohle zugeführt wird. In Fig. 2 wird eine Schichtung aus Erz/Kohle/Pellets auf einem Drehrost oder dergleichen gezeigt. Es wird Kreislaufgas mit einer Temperatur oberhalb der Starttemperatur der Boudouard Reaktion (typisch > 950° C) in den Reduktionsreaktor 10 geleitet. Dort wird ein Teil des Erzsauerstoffs durch Umsetzung mit dem Gas (indirekte Reduktion) reduziert, weiterhin durch Übertragung von Gas auf Kohle die Erzeugung von CO aus CO₂ und C entsprechend der Boudouard Reaktion bewirkt. Das entstandene CO reagiert mit Erzsauerstoff (direkte Reduktion), wobei wieder CO₂ ensteht.

Das unter 900° C abgekühlte Reduktionsgas wird mittels eines Gebläses 14 aus dem Reduktionsreaktor 10 über eine Kombination aus zwei Wärmetauscher 12, 13 bzw. Rekuperatoren gesaugt und durchströmt das Gebläse 14 mit etwa 300° C. Der Wärmetauscher 12 gibt die gespeicherte Wärme dem Gas nach Austritt aus dem Gebläse 14 wieder zurück.

Weiterhin weist die Anlage zwei Regeneratoren 15, 16 auf, die Wärmespeicherelemente beispielsweise Keramikkugeln aufweisen. Den Regeneratoren 15, 16 sind Verbrennungsräume 17, 18 zugeordnet, denen Luft über ein Gebläse 19 zur Verbrennung des im Überschuß vorhandenen Reduktionsgases zugeführt wird. Selbstverständlich kann auch nur eine Verbrennungskammer und an anderer Stelle vorgesehen sein. Die Luft wird zur Vorerwärmung über den Rekuperator 13 geleitet. Das die Reduktionsgase führende Rohrleitungssystem ist über Ventile 9, 9' und 4, 5 mit den Regeneratoren 15 und 16 und den Verbrennungskammern 17 und 18 verbunden. Die Luft für die Verbrennungskammern 17, 18 wird vom Rekuperator 13 über Ventile 3, 6 geleitet. Weiterhin sind die Regeneratoren 15, 16 über Ventile 7, 8 an eine Abgasleitung 20 angeschlossen und über Ventile 1 und 2 mit dem Reduktionsreaktor 10 verbunden. Die Regeneratoren 15, 16 nehmen zwei Zustände an. Im Zustand eins sind die Ventile 2, 3, 4, 7, 9' geschlossen, während die Ventile 1, 5, 6, 9 offen sind. Das Reduktionsgas bzw. Kreislaufgas gelangt zu etwa 80-90 % in den Regenerator 15, der Wärme abgibt, so daß das Kreislaufgas > 1000° C zum Beispiel ca. 1300° C aufgeheizt wird und in die Reduktionskammer 10 zurückgeführt wird. Der verbliebene Teil (10-20 %) des Reduktionsgases strömt in die Verbrennungskammer 18, in der es mit der Luft verbrannt wird und die entstehende Wärme heizt den Regenertor 16 auf. Das Abgas wird über die Abgasleitung 20 abgeführt, in dem sowohl der Erzsauerstoff als auch der aus der Verbrennung herrührende Sauerstoff das System verlassen. Verbrennungsgas wird jedoch keinesfalls mit Gas gemischt, das durch den Reduktionsreaktor geführt wird. Im Zustand 2 nimmt der Regenerator 15 Wärme, die durch die Verbrennung in der Verbrennungskammer 17 entsteht, auf und der Regenerator 16 gibt seine Wärme an das zwangszirkulierte Reduktionsgas ab. Dabei sind die Ventile 2, 3, 4, 7 und 9' offen, während die Ventile 1, 5, 6, und 8 geschlossen sind.

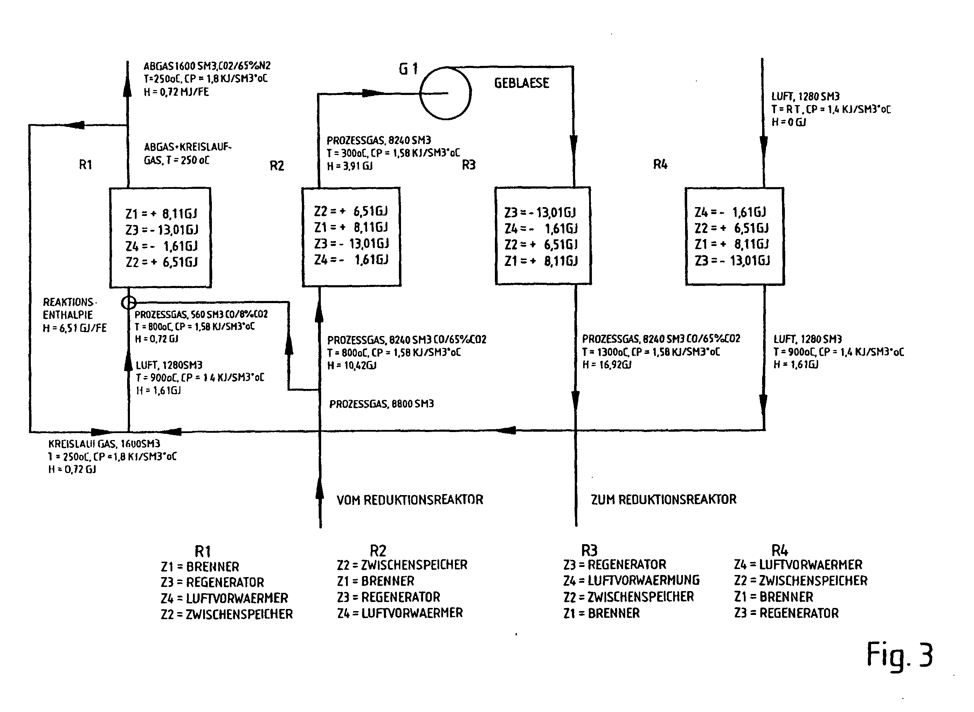

In Fig. 3 ist das Schema von vier im Zyklus arbeitenden Regeneratoren dargestellt, die zu einem Satz zusammgeschaltet sind. Fig. 3 zeigt das Zusammenwirken der vier Regeneratoren R1, R2, R3, R4 während des Ablaufs des vierstufigen Zyklus. Jeder Regenerator R1, R2, R3 und R4 durchläuft die Abfolge derselben vier Zyklen Z1 bis Z4. Die Zahlangaben beziehen sich auf die Erzeugung von einer Tonne Eisen in Form von DRI. Die Verhältnisse sind so dargestellt, als würde der gesamte Wärmeaustausch für die Erzeugung dieser Eisenmenge durch nur einen Satz von vier Wärmetauschern gehen. Bei einer Produktionsanlage mit einer Jahresleistung von 500 000 tFe/a wird etwa jede Minute eine Tonne Eisen erzeugt. Es ist dann erforderlich, eine ganze Reihe von derartigen Sätzen von jeweils vier Regeneratoren an dem Reduktionsreaktor einzusetzen. Insbesondere eignen sich Drehrost- bzw. Wanderrost-Verfahren dazu, eine Reihe von Regeneratorsätzen entlang des Reduktionsweges und des Weges der gleichzeitig ablaufenden Kohlevergasung anzuordnen. Werden für eine Anlage der genannten Kapazität zwölf Regeneratorsätze angenommen, bei denen jeder der vier Regeneratoren einen Feuerfestbesatz von 2t bei einer Umschaltzeit von einer Minute haben, so sind die in Fig. 3 angegebenen Durchsatzzahlen durch 12 zu teilen, um die Werte für einen Regeneratorsatz zu bekommen.

Fig. 3 zeigt die vier Regeneratoren in einem von vier Zuständen Z1 bis Z4. Regenerator R1 befindet sich im Zustand Z1 und wird gerade mit den heißen Brennergasen (siehe untere Textleiste) beaufschlagt. Dabei werden 560 sm3 Gas mit 92 % CO/8 % CO₂ mit 1280 sm3 Luft verbrannt. Gas und Luft haben Eingangstemperaturen von 800° C bzw. 900° C. Da die Verbrennungsgase für den Regenerator R1 zu heiß wären, werden die Verbrennungsgase mit 1600 sm3 im Kreislauf geführtem Abgas von 250° C gemischt. Bei diesem Zustand nimmt der Regenerator also 8,11 GJ auf.

Regenerator R2 befindet sich im Zustand Z2 und übernimmt als Zwischenspeicher Wärme von den 8240 sm3 Prozeßgas, die dem Reduktionsreaktor entnommen werden. Das Gas wird von 800° C auf 300° C abgekühlt, um es mit einem Gebläse G1 umwälzen zu können. Dabei werden 6,5 GJ an den Regeneratoren R2 abgegeben.

Das Gebläse G1 fördert das in R2 abgekühlte Gas zur Erwärmung auf Arbeitstemperatur von 1300° C durch Regenerator R3, der sich im Zustand Z3 befindet. Bei der Erwärmung entnimmt das Prozeßgas dem Regenerator 13,01 GJ. Durch den Regenerationsvorgang hat das Gas nun eine Enthalpiereserve von 6,51 GJ. Das ist der Enthalpiebedarf für eine Tonne Eisen, die nach dem Reduktionsablauf A in Fig. 3 erzeugt wird (363 MJ/Fe entspricht 6,51 GJ/t Fe).

Der Regenerator R4, im Zustand Z4, wärmt mit nach der Erwärmung des Prozeßgases noch vorhandener Enthalpie die Verbrennungsluft für Regenerator R1 auf 900° C vor. Dabei werden 1,61 GJ entnommen.

Bei der beschriebenen Betriebsweise ist die Wärmebilanz des Regeneratorsystems ausgeglichen. Das Verfahren ist autotherm und benötigt die geringstmögliche Kohlenstoffmenge. Diese ist gerade ausreichend, die Reduktion der Oxide und die sonst noch erforderlichen Energieaufwände zu decken: Trocknung, Calcinierung sowie fühlbare Wärme der Gangart und des Eisens. Von diesen wurde angenommen, daß sie den Reaktor mit 1150° C verlassen. Außerdem wurde ein gewisser thermischer Verlust und der Enthalpieinhalt des Abgases berücksichtigt, das die Anlage mit 250° C verläßt.

Der Kohlenstoffbedarf kann jedoch noch weiter gesenkt werden, wenn der Energieinhalt der Verkokungsgase der Kohle ca. 200 sm3/t Kohle mit ca. 34 MJ/sm3 ausgenutzt wird.

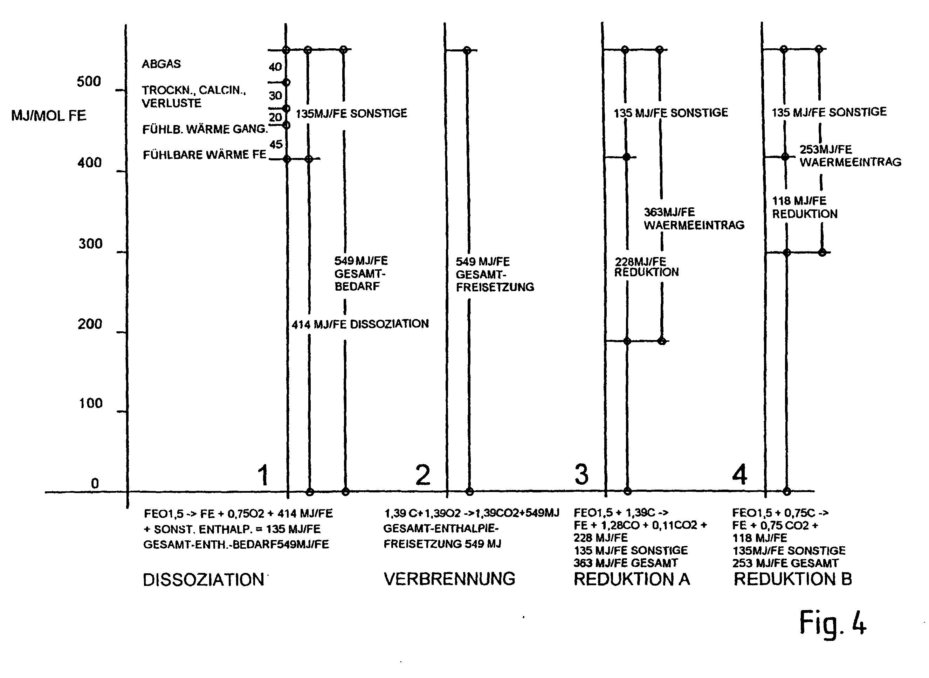

Wie Fig. 4 zeigt und wie auch im Zusammenhang mit Gleichungen 3 und 4 erwähnt, gibt es verschiedene Möglichkeiten, ein autothermes Verfahren bei gleichem Kohlenstoffbedarf zu führen. Diese Varianten können sämtlich mit dem erfindungsgemäßen Verfahren durchgeführt werden.

Teil 1 in Fig. 4 zeigt den zur Auflösung (Dissoziation) des Eisenoxids erforderlichen Enthalpiebedarf (414 MJ/Fe). Zusammen mit dem sonstigen erforderlichen Enthalpiebedarf von 135 MJ/Fe ergibt sich ein Gesamtbedarf von 549 MJ/Fe. Zur Beantwortung der Frage, wieviel Kohlenstoff erforderlich ist, diese Enthalpie aufzubringen, errechnet man, wieviel Kohlenstoff zu CO₂ oxidiert, diese Enthalpie freisetzt. Teil 2 der Fig. 4 zeigt, daß dafür 1,39 Mol C erforderlich sind. Teil 3 der Fig. 4 zeigt nun, welcher Anteil dieser 414 MJ/Fe bzw. der 549 MJ/Fe, die für die Darstellung des Eisens erforderlich sind, von außen in den Reduktions- bzw. Vergasungsreaktor hinein übertragen werden müssen, um die Reduktion hauptsächlich über CO laufen zu lassen. Von den notwendigen 540 MJ/Fe müssen 363 MJ/Fe von außen zugeführt werden. Sie werden durch Verbrennung des durch die Reduktion erzeugten CO im Verbrennungsbereich des Reaktors freigesetzt und werden über Regeneratoren übertragen.

Die in Teil 4 von Fig. 4 dargestellte Reduktion benötigt auch wieder 549 MJ/Fe, es müssen jedoch nur 253 MJ/Fe übertragen werden. Der Kohlenstoffbedarf für die Reduktion sowie für außerhalb des Reduktionsraumes erfolgende Verbrennung weiteren Kohlenstoffs beträgt wie in Teil 3 von Fig. 4 insgesamt 1,39 Mol C/Fe. Wie erwähnt, muß die Reaktion von Teil 4 jedoch geringfügig nach 3 verschoben werden, um die thermodynamische Hürde zu überwinden. Es müssen also neben dem CO₂ etwa 10 % CO im Abgas vorhanden sein.

Wichtige Schlußfolgerung dieser Betrachtung unterschiedlicher Reduktionswege bei gleichem Kohlenstoffbedarf ist, daß für Verfahren in der Nähe von "4" weniger Wärme durch die Regeneratoren in den Reduktionsraum übertragen werden muß. Da die Leistung eines Kohlereduktionsreaktors aber von der Leistungsfähigkeit der Wärmeübertragung abhängt, kann der Durchsatz einer gegebenen Anlage durch Verschiebung des Prozesses von "3" nach "4" um ca. 20 % gesteigert werden.

## Patentansprüche

1. Verfahren zur Gewinnung von Eisen durch Direktreduktion von Eisenerz mit Kohle in einem Reduktionsreaktor (10) ohne zusätzliches, d.h. nicht aus der Kohle im Reduktionsreaktor (10) erhaltenes, Reduktionsga, wobei die Kohle in dem Reaktor (10) mit der bei der Reduktion entstehenden Kohlensäure zu Reduktionsgas vergast wird und im Überschuß entstehendes Reduktionsgas in einem von dem Reduktionsbereich des Reaktors (10) getrennten Verbrennungsbereich (17 oder 18) verbrannt wird, wobei die dabei entstehende Wärme über einen Wärmetauscher (15 oder 16) dem im Reduktionsraum des Reaktors (10) befindlichen Gas zur Deckung des Enthalpiebedarfs der in diesem Raum stattfindenden Reaktion zurückgeführt wird,
**dadurch gekennzeichnet,**
**daß** das Gas des Reduktionsraumes durch den als Hochtemperatur-Wärmetauscher ausgebildeten Wärmetauscher (15, 16) in den Reduktionsraum zur Verbesserung der Wärmeübertragung auf das Eisenerz und die Kohle zwangszirkuliert (Gebläse 14) wird.

2. Verfahren nach Anspruch 1, **dadurch gekennzeichnet, daß** ein Teil des aus dem Reduktionsraum herausgeführten Gases verbrannt und die entstehende Wärme gespeichert wird und daß der andere Teil des aus dem Reduktionsraum herausgeführten Gases die bei dem Verbrennungsvorgang gespeicherte Wärme aufnimmt und mit dieser in den Reduktionsraum zurückgeführt wird.

3. Verfahren nach Anspruch 1 oder 2, **dadurch gekennzeichnet, daß** das Reduktionsgas nach Austritt aus der Reduktionskammer gekühlt wird, wobei die bei der Kühlung entstehende Wärme zwischengespeichert wird, und das gekühlte Gas vor dem Aufnehmen der bei dem Verbrennungsvorgang entstehenden Wärme über ein Zwangszirkulationsmittel (14) geführt wird.

4. Verfahren nach einem der Ansprüche 1 bis 3, **dadurch gekennzeichnet, daß** zumindest ein Teil der zwischengespeicherten Wärme zur Erwärmung der für den Verbrennungsvorgang benötigten Luft bzw. des dafür benötigten Sauerstoffs verwendet wird.

5. Verfahren nach einem der Ansprüche 1 bis 4, **dadurch gekennzeichnet, daß** die Kohlevergasung und die Eisenreduktion in unmittelbarer räumlicher Nähe durchgeführt werden.

6. Verfahren nach einem der Ansprüche 1 bis 5, **dadurch gekennzeichnet, daß** die Kohle und das Erz vor der Vergasung und Reduktion miteinander vermischt werden.

7. Vorrichtung zur Gewinnung von Eisen durch Direktreduktion von Eisenerzen mit Kohle in einem Reduktionsreaktor (10) ohne zusätzliches, d.h. nicht aus der Kohle im Reduktionsreaktor (10) erhaltenes, Reduktionsgas, wobei im Reduktionsraum des Reaktors (10) die Kohle vergast und das Erz reduziert wird und mit dem Reduktionsreaktor (10) ein von diesem gesonderter Verbrennungsraum (17,18) zur weitgehenden Verbrennung von bei der Vergasung im Überschuß zum Reduktionsbedarf entstehenden Gasen Verbunden ist und die bei der Verbrennung entstehende Wärme mit Hilfe mindestens eines Wärmetauschers (15,16) zum Reaktor (10) rückgeführt wird,
**dadurch gekennzeichnet, daß** der Wärmetauscher (15,16) als Regenerator mit Speichermasse zur Speicherung der bei der Verbrennung entstehenden Wärme ausgebildet ist und daß ein Zwangszirkulationsmittel (14) mit dem Reduktionsraum (10) und dem Wärmetauscher (15,16) zur Zirkulation der Reduktionsgase durch den Reduktionsraum (10) und den Wärmetauscher (15,16) verbunden ist.

8. Vorrichtung nach Anspruch 7, **dadurch gekennzeichnet, daß** das Zwangszirkulationsmittel (14) ein Gebläse ist, auf dessen Eingangsseite ein Kühler (12,13) für das aus dem Reduktionsraum kommende Gas vorgesehen ist.

9. Vorrichtung nach Anspruch 7 oder 8, **dadurch gekennzeichnet, daß** mindestens zwei Regeneratoren (15,16) vorgesehen sind, von denen der eine die durch die Verbrennungsgase entstehende Wärme aufnimmt und der andere die aufgenommene Wärme an das Kreislaufgas abgibt.

10. Vorrichtung nach einem der Ansprüche 7 bis 9, **dadurch gekennzeichnet, daß** mehrere als Regeneratoren (R1,R2,R3,R4) ausgebildete Wärmetauscher vorgesehen sind, die wechselweise von Außenluft, Reduktionsgasen und Verbrennungsgasen durchströmbar sind.

11. Vorrichtung nach einem der Ansprüche 7 bis 10, **dadurch gekennzeichnet, daß** vier Regeneratoren (R1,R2,R3,R4) vorgesehen sind, wobei die Regeneratoren zyklisch vier Arbeitszustände einnehmen, in denen jeder Regenerator nacheinander je einen der folgenden Zustände aufweist:
a) heißes Gas aus dem Verbrennungsraum wird durch einen ersten Regenerator (R1) geleitet, dabei abgekühlt und zu einer Abgasanlage weitergeleitet,
b) abgekühltes Reduktionsgas wird durch einen zweiten Regenerator (R3) geleitet, dabei auf die Arbeitstemperatur des Reduktionsraums aufgeheizt und in den Reduktionsraum zurückgeblasen,
c) Außenluft mit etwa Raumtemperatur wird durch einen dritten Regenerator (R4) geleitet, dabei aufgewärmt und in den Verbrennungsraum geleitet und
d) Gas aus dem Reduktionsraum wird von dem Gebläse durch einen vierten Regenerator (R2) gesaugt und als gekühltes Reduktionsgas nach b) im zweiten Regenerator (R3) weiterbehandelt.

12. Vorrichtung nach einem der Ansprüche 7 bis 11, **dadurch gekennzeichnet, daß** der Reduktionsraum Bestandteil eines Drehrostofens ist.

## Claims

1. Method for the extraction of iron by direct reduction of iron ore using coal in a reduction reactor (10) without additional reducing gas i.e. not obtained from the coal in the reduction reactor (10), wherein the coal in the reactor (10) is gasified together with the carbon dioxide produced during the reduction to form reducing gas and the reducing gas, which is produced in excess, is combusted in a combustion zone (17 or 18) separated from the reduction zone of the reactor (10), wherein heat produced in the combustion is fed back via a heat exchanger (15 or 16) to the gas present in the reduction chamber of the reactor (10) to cover the enthalpy demand of the reactions taking place in this chamber, **characterised in that** the reduction chamber gas is force-circulated (fan 14) through the heat exchanger (15, 16), which is a high-temperature heat exchanger, and the reduction chamber thereby to improve the heat transfer to the iron ore and to the coal.

2. Method according to claim 1, **characterised in that** a portion of the gas removed from the reduction chamber is combusted and the hereby produced heat is stored, and that the other portion of the gas removed from the reduction chamber absorbs the heat stored from the combustion process and is then fed back into the reduction chamber.

3. Method according to claim 1 or 2, **characterised in that** after emerging from the reduction chamber, the reducing gas is cooled, the heat removed during cooling being stored temporarily, and the cooled gas being conveyed through forced circulation means (14) before it absorbs the heat produced in the combustion process.

4. Method according to any one of claims 1 to 3, **characterised in that** at least one part of the temporarily stored heat is used for heating the air needed for the combustion process or the oxygen needed for this purpose.

5. Method according to any one of claims 1 to 4, **characterised in that** the coal gasification and the iron reduction are carried out in immediate spatial proximity.

6. Method according to any one of claims 1 to 5, **characterised in that** the coal and the ore are mixed with one another prior to gasification and reduction.

7. Plant for the extraction of iron by direct reduction of iron ores using coal in a reduction reactor (10) without additional reducing gas i.e. not obtained from the coal in the reduction reactor (10), wherein in the reduction chamber of the reactor (10) the coal is gasified and the ore is reduced and a combustion chamber (17, 18) being separated from the reduction reactor (10) is connected to the reduction reactor (10), for the extensive combustion of gases produced during gasification in excess of such gas amount as required for the reduction, and the heat produced during combustion is returned to the reduction reactor (10) by means of at least one heat exchanger, **characterised in that** the heat exchanger (15, 16) is a regenerator having a storage mass for storing the heat produced during combustion, and **in that** means (14) to generate forced circulation of the reducing gases are connected to the reduction chamber (10) and the heat exchanger (15, 16), thereby to circulate the reducing gases through the reduction chamber (10) and the heat exchanger (15, 16).

8. Plant according to claim 7, **characterised in that** the forced circulation generation means (14) comprise a fan, on whose admission side a cooler (12, 13) is provided for gas entering into the fan from the reduction chamber.

9. Plant according to claim 7 or 8, **characterised in that** at least two regenerators (15, 16) are provided of which one absorbs heat produced by the combustion gases and the other delivers the absorbed heat to the recycling gas.

10. Plant according to any one of claims 7 to 9, **characterised in that** a plurality of heat exchangers constructed as regenerators (R1, R2, R3, R4) are provided, the regenerators being arranged such that ambient air, reducing gases and combustion gases can alternately flow therethrough.

11. Plant according to any one of Claims 7 to 10, **characterised in that** four regenerators (R1, R2, R3, R4) are provided, the regenerators arranged for cyclically assuming four operating states in which each regenerator exhibits the following states, one after the other:
a) hot gas from the combustion chamber is conveyed through a first regenerator (R1), cooled in doing so and passed on to a waste gas unit;
b) cooled reducing gas is conveyed through a second regenerator (R3), heated up in doing so to the operating temperature of the reduction chamber and conveyed back into the reduction chamber;
c) ambient air at approximately room temperature is conveyed through a third regenerator (R4), heated up in doing so and conveyed into the combustion chamber; and
d) gas from the reduction chamber is sucked by the fan through a fourth regenerator (R2) and treated further in accordance with b) in the second regenerator (R3) as cooled reducing gas.

12. Device according to any one of claims 7 to 11, **characterised in that** the reduction chamber is a component of a rotary-grate furnace.

## Revendications

1. Procédé d'extraction de fer par réduction directe de minerai de fer avec du charbon dans un réacteur de réduction (10) sans gaz de réduction supplémentaire, c'est à dire qui ne soit pas obtenu à partir du charbon dans le réacteur de réduction (10), dans lequel le charbon est gazéifié dans le réacteur (10) en gaz de réduction avec l'acide carboxylique formé lors de la réduction, et dans lequel le gaz de réduction formé en excès est brûlé dans une zone de combustion (17 ou 18) séparée de l'espace de réduction du réacteur (10), la chaleur formée à cet égard étant recyclée par un échangeur de chaleur (15 où 16) dans le gaz se trouvant dans l'espace de réduction du réacteur (10) pour couvrir le besoin d'enthalpie de la réaction se déroulant dans cet espace,
**caractérisé en ce que** le gaz de l'espace de réduction est mis en circulation forcée (buse 14) par l'échangeur de chaleur (15, 16) conçu en tant qu'échangeur de chaleur haute température dans l'espace de réduction pour améliorer la transmission de chaleur sur le minerai de fer et le charbon.

2. Procédé selon la revendication 1, **caractérisé en ce qu'**une partie du gaz sortant de l'espace de réduction est brûlé et la chaleur dégagée est stockée, et **en ce que** l'autre partie du gaz sortant de l'espace de réduction capte la chaleur stockée lors du processus de combustion et est recyclée avec celle-ci dans l'espace de réduction.

3. Procédé selon la revendication 1 ou 2, **caractérisé en ce que** le gaz de réduction est refroidi après être sorti de la chambre de réduction, la chaleur dégagée lors du refroidissement étant stockée temporairement, et le gaz refroidi étant amené avant captage de la chaleur formée par le processus de combustion par un moyen de circulation forcée (14).

4. Procédé selon l'une des revendications 1 à 3, **caractérisé en ce qu'**au moins une partie de la chaleur stockée temporairement est utilisée pour chauffer l'air nécessaire au processus de combustion ou l'oxygène nécessaire à cet égard.

5. Procédé selon l'une des revendications 1 à 4, **caractérisé en ce que** la gazéification du charbon et la réduction du fer sont réalisés selon une proximité spatiale directe.

6. Procédé selon l'une des revendications 1 à 5, **caractérisé en ce que** le charbon et le minerai sont mélangés ensemble avant la gazéification et la réduction.

7. Dispositif d'extraction du fer par réduction directe de minerais de fer avec du charbon dans un réacteur de réduction (10) sans gaz de réduction supplémentaire, c'est à dire qui ne soit pas obtenu à partir du charbon dans le réacteur de réduction (10), dans lequel le fer est gazéifié dans l'espace de réduction du réacteur (10), le minerais est réduit, et dans lequel est relié au réacteur de réduction (10) un espace de combustion séparé de celui-ci (17, 18) et permettant une combustion importante des gaz formés en excès aux fins de réduction lors de la gazéification, et dans lequel la chaleur dégagée lors de la combustion est recyclée vers le réacteur (10) à l'aide d'au moins un échangeur de chaleur (15, 16),
**caractérisé en ce que** l'échangeur de chaleur (15, 16) est conçu en tant que régénérateur comportant une masse de stockage permettant de stocker la chaleur dégagée lors de la combustion et **en ce qu'**un moyen de circulation forcée (14) est relié à l'espace de réduction (10) et à l'échangeur de chaleur (15, 16) à des fins de circulation des gaz de réduction par l'espace de réduction (10) et l'échangeur de chaleur (15, 16).

8. Dispositif selon la revendication 7, **caractérisé en ce que** le moyen de circulation forcée (14) est une buse sur le côté d'entrée de laquelle est prévu un refroidisseur (12, 13) pour le gaz arrivant depuis l'espace de réduction.

9. Dispositif selon la revendication 7 ou 8, **caractérisé en ce qu'**au moins deux régénérateurs (15, 16) sont prévus, parmi lesquels l'un capte la chaleur formée par les gaz de combustion et l'autre dégage la chaleur captée au niveau du gaz de circulation.

10. Dispositif selon l'une des revendications 7 à 9, **caractérisé en ce que** sont prévus plusieurs échangeurs de chaleur conçus en tant que régénérateurs (R1, R2, R3, R4), qui peuvent être parcourus en alternance par de l'air extérieur, des gaz de réduction et des gaz de combustion.

11. Dispositif selon l'une des revendications 7 à 10, **caractérisé en ce que** quatre régénérateurs (R1, R2, R3, R4) sont prévus, les régénérateurs prenant cycliquement quatre états de fonctionnement dans lesquels chaque régénérateur présente consécutivement respectivement un des états suivants :
a) le gaz chaud issu de l'espace de combustion est dirigé par un premier régénérateur (R1), refroidi à cet égard et transféré vers une installation d'effluents gazeux,
b) le gaz de réduction refroidi est dirigé par un second régénérateur (R3), chauffé à cet égard à la température de service de l'espace de réduction et recyclé dans l'espace de réduction,
c) de l'air extérieur à une température approximativement égale à la température ambiante est dirigé par un troisième régénérateur (R4), à cet égard chauffé et dirigé dans l'espace de combustion, et
d) le gaz sortant de l'espace de réduction est aspiré par la buse via un quatrième régénérateur (R2) et traité ultérieurement en tant que gaz de réduction refroidi selon b) dans le second régénérateur (R3).

12. Dispositif selon l'une des revendications 7 à 11, **caractérisé en ce que** l'espace de réduction est un composant d'un four à grille tournante.
